# EUROPEAN PATENT APPLICATION

(11) **EP 3 343 187 A1**
(43) Date of publication of application: **04.07.2018**
(21) Application number: 17209277.7
(22) Date of filing: 21.12.2017
(51) Int. Cl.: G01G 7/06

(54) **LOAD CELL**

(30) Priority: 23.12.2016 IT 201600130587
(71) Applicant: Nanolever S.r.l., 47032 Bertinoro (FC) (IT)
(72) Inventor: ROMBOLI, Gilberto, 47838 Riccione (RN) (IT); ANDREOLA, Renato, 35012 Camposampiero PD (IT); BUCCI, Daniele, 47522 Cesena FC (IT)
(74) Representative: Soldatini, Andrea

(57) **Abstract**

The invention concerns a load cell (100) comprising:
i) a base (110)
ii) an elastically deformable body (120) fixed to said base (110) so as to define a cavity (130) therewith,
iii) an electronic unit (200) housed in one between the base (110) and said elastically deformable body (120) and comprising a first printed circuit board (210) having a flat shape, said first printed circuit board (210) being accessible from a seat (114) formed in the base (110) or in the elastically deformable body (120) and facing said cavity (130) close to a flat portion formed in one between the deformable body (120) and the base (110), said flat portion being parallel to the first printed circuit board (210) which is configured to define with the latter a capacitive or inductive position sensor.

The deformable body (120) is movable from and towards the base (110) and is configured such that the flat portion is kept parallel to the printed circuit board (210). during the movements from and towards the base (110). The load cell (100) also comprises a metal pin (160) slidably fitted and lockable in position in a cavity (124) formed in one between the deformable body (120) or the base (110) coaxially to the seat (114) of the first printed circuit board (210), a free end of said metal pin (160) protruding from said cavity (124) and forming the flat portion of the deformable body (120) or of the base (110) that defines a capacitive or inductive position sensor with the printed circuit board (210).

## Description

### Technical field of the invention

The present invention concerns in general the field of weighing devices for packaging lines and in particular a dynamic load cell.

### Background

A load cell is a transducer used to measure a force applied to a body. The most common application of load cells is in electronic weighing systems and in the measurement of mechanical compression and traction forces.

A load cell generally comprises a metal measuring body, typically made of steel or aluminium, on which a force is applied that causes a deformation thereof. Depending on the configuration of the metal body, such a deformation can for example be a compression, a traction, a flexing or a combination thereof.

For example, load cells are known comprising S-shaped measuring bodies that are typically placed in traction or compression along an axis passing through the centre of the body. So-called *"off-center"* load cells are also known comprising a parallelepiped-shaped body in which a butterfly-shaped through opening is formed that allows the body, suitably mounted canti-levered on a support, to flex following the movement of a parallelogram. With respect to the load cells that operate in traction or compression, *off-center* ones offer the advantage of not requiring any alignment between loads applied and the deformation axis of the measurement body.

A conventional load uses one or more strain gauges that, applied at suitable points on the measurement body, detect the deformation thereof through the variation of electrical resistance that such a deformation causes on their electrical circuit. The electrical signal obtained is suitably amplified and processed to calculate the force applied to the body of the load cell.

As well as calibration, load cells typically require the correction of errors of nonlinearity and the compensation of the reading errors caused by variations of the temperature that result in deformation of the measurement body not linked to the loads applied.

Load cells are known comprising capacitive or inductive position sensors instead of conventional strain gauges. Such sensors comprise two flat and parallel interfacing surfaces that move with respect to one another under the action of a force applied to the measurement body of the load cell. In the case of a capacitive sensor, a relative movement between the two interfacing surfaces, i.e. a variation of the distance between the plates of the capacitor, causes a variation of the indicative capacity of the intensity of the force applied.

In the case of an inductive sensor, the relative movement between the two interfacing surfaces causes a variation of magnetic flux and therefore of the current induced, also indicative of the intensity of the force applied.

An example of load cell of the aforementioned type is described in international publication WO 2015/181763 A2 to the Applicant.

With respect to load cells that use strain gauges, those which use capacitive or inductive position sensors have greater thermal stability and greater resistance to fatigue, since, unlike strain gauges, the capacitive or inductive sensors are not in contact with the body of a load cell and therefore they are not affected by its temperature, and nor do they undergo its deformations.

Moreover, capacitive or inductive load cells have greater sensitivity and greater accuracy that strain gauges.

However, there is still a need to improve load cells comprising capacitive or inductive sensors in particular in terms of calibration.

### Summary of the invention

The technical problem tackled and solved by the present invention is therefore that of providing a load cell that allows the aforementioned drawbacks with reference to the prior art to be avoided.

Such a problem is solved by a device according to claim 1.

Preferred characteristics of the present invention are the object of the dependent claims.

The load cell according to the invention comprises a base on which an elastically deformable body is fixed so as to define a cavity therewith. One from the base and the deformable body houses an electronic unit comprising a printed circuit board having a flat shape that faces the cavity close to a flat portion formed in the outer from the deformable body and the base. The flat portion is parallel to the printed circuit board, which is configured to define a capacitive or inductive position sensor therewith. The deformable body is movable from and towards the base and is configured so that the flat portion is kept parallel to the printed circuit board during the movements from and towards the base. According to the invention, the load cell also comprises a metal pin slidably fitted and lockable in position in a cavity formed in one between the deformable body and the base coaxially to the printed circuit board; a free end of the metal pin protruding from the cavity forms the flat portion of the deformable body or of the base that defines the capacitive or inductive position sensor with the printed circuit board.

Thanks to this configuration, it is possible to calibrate the load cell for different maximum loads within the limits of the structural characteristics of the deformable body, which makes it possible to use the same load cell for even very different applications from one another.

According to an embodiment of the invention, the printed circuit board is housed in a seat formed in the base and comprising a collar the protrudes in the cavity perpendicular to the same base. The seat in which the metal pin is housed comprises a recess in which the collar is partially inserted with play; the metal pin protruding from the seat is inserted with play in the collar. The overall configuration of this part of the load cell seen in longitudinal section is that of a labyrinth that effectively obstructs the inlet of dust in the first printed circuit board. It is thus possible to ensure the full operating efficiency of the load cell over time.

According to an embodiment of the invention, the electronic unit comprises a first accelerometer housed in the base and a second accelerometer mounted on top of the deformable body close to a loading area intended to receive a force to be measured. The second accelerometer is connected to the electronic unit through a flexible printed circuit board that projects out from the base and wraps onto the deformable body. Thanks to this configuration it is possible to subtract the accelerations detected by the second accelerometer from those detected by the first accelerometer, thus making it possible to know with precision the disturbances acting on the load cell and eliminate them from the signals detected to the benefit of the accuracy of the weight measurements.

Other advantages, characteristics and ways of using the present invention will become clear from the following detailed description of some embodiments, presented as an example and not for limiting purposes.

### Brief description of the figures

Reference will be made to the figures of the attached drawings, in which:
- figure 1 is a perspective view from above showing a load cell according to the invention;
- figure 2 is a perspective view from below of the load cell of figure 1;
- figure 3 is a section view taken along a plane passing through the line III-III of figure 1;
- figure 4 shows a detail of figure 3;
- figure 5 is a plan view from above of the load cell of figure 1;
- figure 6 is a partial section view taken along a plane passing through the line VI-VI of figure 5.

### Detailed description of preferred embodiments

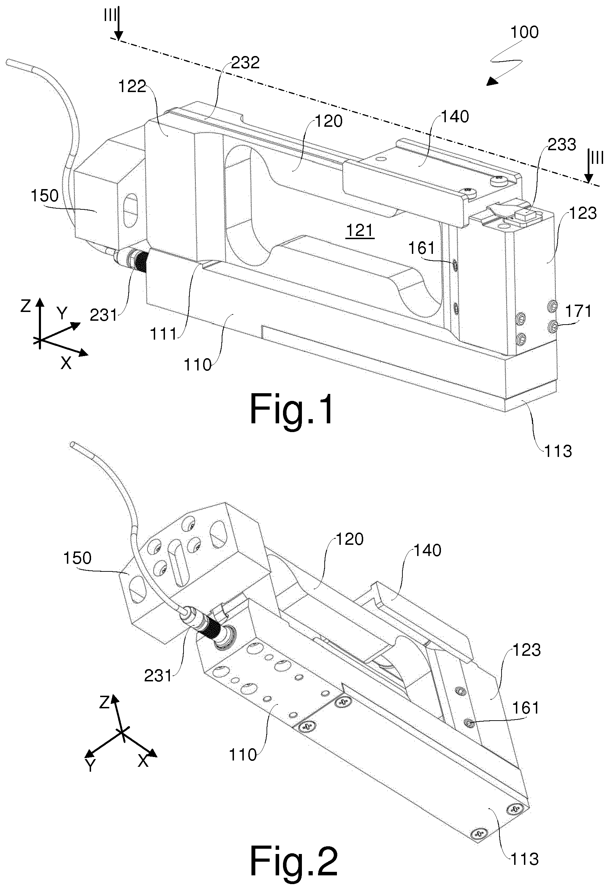

Initially with reference to figures 1 and 2, a load cell according to the invention is indicated in general with reference numeral 100 and is represented in a three-dimensional reference system in which a first direction X, longitudinal, and a second direction Y, transverse, perpendicular to one another, define a horizontal plane, and a third direction Z, vertical, represents a direction perpendicular to the horizontal plane, along which the force of gravity acts.

In a known way, the load cell 100 comprises a base 110, having for example generically the shape of a parallelepiped, and a deformable body 120, also having for example generically the shape of a parallelepiped and in which a butterfly-shaped through opening 121 is formed in the transverse direction Y. The through opening 121 extends in the longitudinal direction X between a first shoulder 122 and a second shoulder 123 of the deformable body 120.

The deformable body 120 extends in the longitudinal direction X substantially for the entire length of the base 110 and in the transverse direction Y substantially for the entire width of the base 110.

The configuration of the load cell illustrated is therefore that of a load cell of the *off-center* type.

The deformable body 120 is fixed onto the base 110 so as to define a cavity 130 therewith.

In the illustrated embodiment, the deformable body 120 is fixed through one of its shoulders, for example the first shoulder 122, to an end of the base 110, at which a protruding portion 111 is formed perpendicularly, i.e. in the vertical direction Z. Between the deformable body 120 and the base 110 a cavity 130 is therefore present.

On the deformable body 120 there is a loading area 140, for example in the form of a plate, intended to receive a load in the vertical direction Z.

In the illustrated embodiment, the load plate 140 is arranged on top of the deformable body 120 close to the second shoulder 123.

The load cell 100 according to the invention is of the capacitive or inductive type and comprises, in a known way, an electronic unit 200 housed in one between the base 110 and the deformable body 120 in a suitable cavity closed tight by a cover.

In the illustrated embodiment the electronic unit 200 is housed in the base 110 in a cavity 112 closed tight by a cover 113.

Hereinafter, reference will be made to a capacitive load cell, but it should be understood that this is not a limiting characteristic of the invention and that the same characteristics of the invention are also applicable to the case of use of an inductive position sensor.

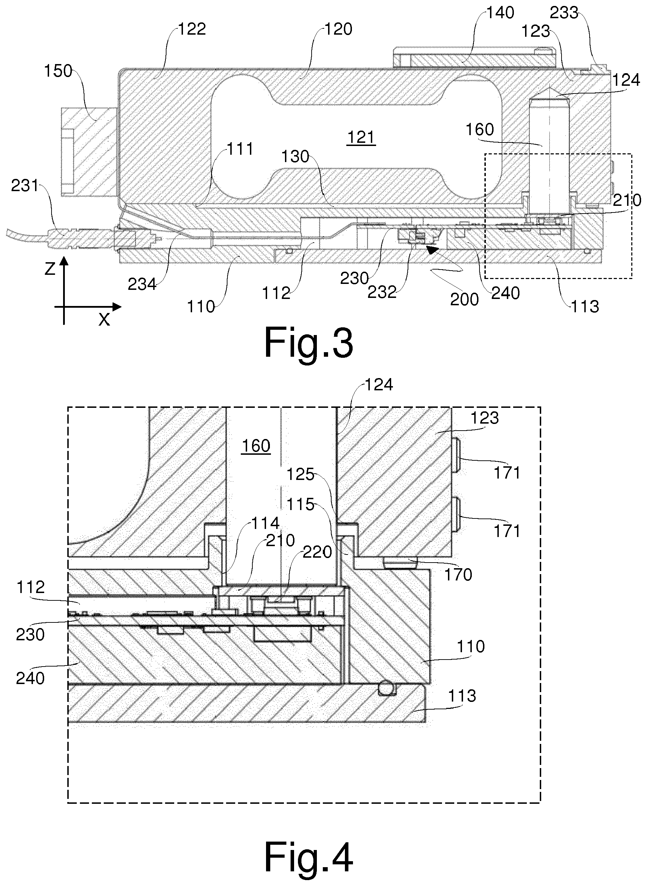

With reference to figures 3 and 4, the electronic unit 200 comprises a first printed circuit board 210 having a flat shape that faces the cavity 130. The first printed circuit board 210 constitutes a first capacitor surface configured to generate an electric field. The capacitive position sensor of the load cell 100 exploits a flat portion of the deformable body 120 parallel to the first printed circuit board 210 as second capacitor surface.

In the illustrated embodiment, such a flat portion is a portion of the surface of the second shoulder 123 of the deformable body 120 facing towards the cavity 130.

The deformable body 120 is movable from and towards the base 110 and is configured such that the flat portion that forms the second capacitor surface is kept parallel to the first printed circuit board 210 during the movements from and towards the base 110.

In the illustrated embodiment, the load cell 100 of the *off-center* type is fixed canti-levered onto a support (not shown) at the end of the base 110 on which the deformable body 120 is fixed, or through an attachment 150 for example fixed to the first shoulder 122 of the deformable body 120 in turn connected onto the protruding portion 111 of the base 110.

As known, a force applied onto the load plate 140 and acting in the vertical direction Z determines a flexing in elastic field of the deformable body 120, which moves in the cavity 130 towards the base 110. By means of the butterfly-shaped through opening 121, the body 120 deforms like a parallelogram, so that the second shoulder 123 approaches the base vertically without rotating with respect to the vertical axis Z. Consequently, the flat portion of the second shoulder 123 approaches the first printed circuit board keeping parallel to it.

The first printed circuit board 210 has an electrically active surface having a circular shape formed on it, surrounded by a ring made of insulating material and by a further ring made of conductive material that acts as guard ring against the edge effects to which a flat capacitor is typically subjected. The first printed circuit board 210 also comprises a further ring made of insulating material that surrounds the guard ring and an outer ring connected to ground.

Under the first printed circuit board 210 a microprocessor 220 is mounted that is configured to detect values of the capacity of the capacitive position sensor as the position of the shoulder 123 varies in the vertical direction Z when the deformable body 120 is subjected to a force applied onto the load plate 140. The first printed circuit board 210 is electrically connected to a second printed circuit board 230 of the electronic unit 200 on which electronic components necessary to convert the capacity of the capacitor into a digital signal able to be processed by a control system are mounted. The second printed circuit board 230 is housed in the cavity 112 of the base 110 and supported by a support element 240, for example a spring arranged between the cover 113 and the second printed circuit board 230, so as to press the latter against the first printed circuit board 210.

The second printed circuit board 230 can be connected to a remote control system (not shown) through a cable 231 that comes out from the base 110.

As shown in figures 3 and 4, the first printed circuit board 210 is preferably housed in a seat 114 formed in the cavity 112 and is pressed against it by the support element 240 that supports the second printed circuit board 230. Advantageously, the first printed circuit board 210 can be supported on the second printed circuit board 230 and electrically connected to it through a plurality of spring-operated contact feet (not shown). Together with the support element 240, such contact feet contribute to pressing the first printed circuit board 210 against the seat 114, keeping the position thereof stable. The seat 114 faces the cavity 130 between the base 110 and the deformable body 120 of the load cell 100.

According to the invention, the load cell 100 also comprises a metal pin 160 slidably inserted in a cavity of corresponding shape formed in one between the deformable body 120 and the base 110 coaxially to the seat 114 in which the first printed circuit board 210 is housed. Basically, the configuration of the load cell 100 is such that the metal pin 160 and the first printed circuit board 210 are respectively housed in the deformable body 120 or in the base 110 and arranged in front of one another.

In the illustrated embodiment, such a cavity, indicated with reference numeral 124, is formed in the deformable body 120, and in particular in the second shoulder 123 thereof. Therefore, the metal pin 160 is housed in the deformable body 120.

The metal pin 160 protrudes from the cavity 124 towards the first printed circuit board 210 and its free end protruding from the seat 124 constitutes the flat portion of the deformable body 120 that forms the second flat capacitor plate of the capacitive load cell 100.

The position of the metal pin 160 in the cavity 124 is adjustable through threaded dowels accessible from the outside of the deformable body 120.

In the illustrated embodiment of the second shoulder 123, for example threaded dowels 161 are shown inserted transversely in the second shoulder 123.

Thanks to this configuration, the load cell 100 can be calibrated for different maximum loads within the operative limitations defined by the mechanical characteristics of the deformable body 120 and by the size of the cavity 130 that separates it from the base 110.

In order to proceed to the calibration of the load cell 100 according to the invention, the metal pin 160 inserted in the cavity 124 is left free to slide and rests initially on the first printed circuit board 210.

In the illustrated embodiment this occurs by means of the weight of the metal pin 160, which is arranged in the vertical direction Z.

A known mass corresponding to a predetermined maximum load is arranged on the load plate 140. By means of the force that such a known mass exerts on the load plate 140, the deformable body 120 deforms, approaching the base 110 of the load cell 100.

In the illustrated embodiment the deformable body 120 flexes, deforming like a parallelogram, resulting in a movement of the second shoulder 123 in the vertical direction Z.

Consequently, the metal pin 160 slides with respect to the cavity 124; in particular, the metal pin enters further into the seat going into a more withdrawn position than the initial one. By acting on the threaded dowels 161, the metal pin 160 is locked in this position, which corresponds to the configuration of maximum deformation of the load cell 100. By removing the known mass, the deformable body 120 elastically goes back into the undeformed position, consequently moving the metal pin 160 away from the first printed circuit board 210. The distance between the free end of the metal pin 160 and the first printed circuit board 210 determines the reference capacity of the capacitive sensor of the load cell 100, by which all of the force measurements can be carried out.

Again with reference to figures 3 and 4 and to the illustrated embodiment, the seat 114 in which the first printed circuit board 210 is housed can advantageously comprise a collar 115 that protrudes in the cavity 130 perpendicular to the base 110. Correspondingly, the cavity 124 of the metal pin 160 comprises a recess 125 in which the collar 115 is partially inserted with play. The metal pin 160 that protrudes from the cavity 124 is inserted with play in the collar 115. The overall configuration in longitudinal section of this part of the load cell is that of a labyrinth that effectively obstructs the entry of dust into the first printed circuit board 210, allowing the full operating efficiency of the load cell 100 to be ensured over time.

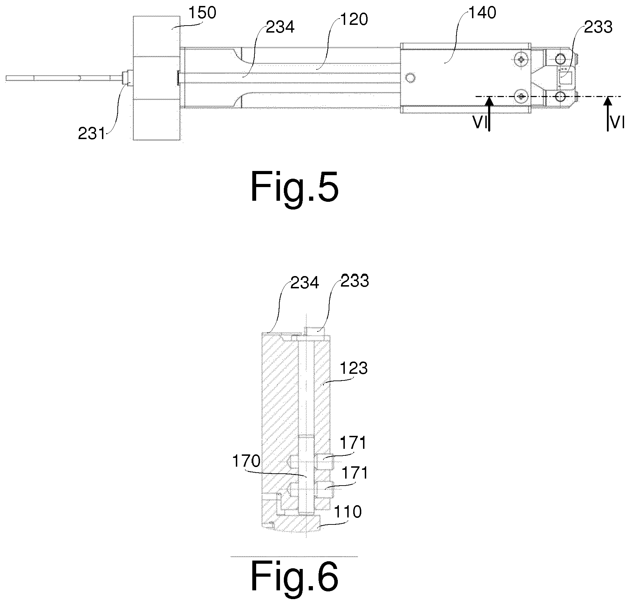

Now with reference to figures 5 and 6, according to a preferred embodiment of the invention the load cell 100 comprises end-stroke members that limit the movement of the deformable body 120 towards the base 110.

The end-stroke members, indicated with reference numeral 170 are slidably inserted in respective seats having a corresponding shape formed in the deformable body 120 or in the base 110. The end-stroke members can be locked in such seats through threaded dowels 171 similarly to the metal pin 160.

In the illustrated embodiment, the seats of the end-stroke members 170 are formed in the second shoulder 123 of the deformable body 120 close to its free end in the longitudinal direction X.

During the calibration of the load cell 100, the end-stroke members 170 are left free to slide in the vertical direction Z and rest on the base 110. Once the known mass has been applied and the position of the metal pin 160 has been locked in its cavity 124 as described above, the locking of the end-stroke members 170 also takes place.

In this way, the position of the end-stroke members 170 corresponds to that of the maximum deformation of the load cell 100, i.e. the maximum allowed displacement for the deformable body 120 with respect to the base when it is subjected to the maximum load foreseen.

It should therefore be understood that the end-stroke members 170 have the function of preventing damage to the deformable body 120 of the load cell 100 in the case in which the maximum load foreseen each circumstance is exceeded.

Before proceeding to locking, the known mass is reduced by a few percentage points to decrease the weight force exerted by it. This makes it possible to introduce a safety coefficient with respect to the maximum load, and therefore to the maximum allowed deformation, foreseen for the load cell 100.

The load cell 100 according to the invention can be used in a weighing station in a packaging line of loose products, for example powdered coffee in capsules, medicines in suitable containers and similar.

The packaging lines are equipped with a plurality of apparatuses and devices that typically generate vibrations. Such vibrations have a negative impact on the operation of the weighing station, since they translate into oscillating disturbances on the electrical signals recorded by the load cell.

Again with reference to figures 3 and 4, in order to avoid this drawback the load cell according to the invention comprises a first accelerometer 232 associated with the base 110 and in particular mounted on the second printed circuit board 230 of the electronic unit 200. The first accelerometer 232 detects the accelerations transmitted to the base 110 by a generic apparatus on which the load cell 100 is fixed.

The load cell 100 also comprises a second accelerometer 233 mounted on top of the deformable body 120, in the illustrated embodiment in particular on top of the second shoulder 123 close to the load plate 140, and connected to the electronic unit 200 through a flexible third printed circuit board 234, which comes out from the base 110 and winds onto the deformable body 120. The second accelerometer 234 detects the accelerations acting on the deformable body 120, in the illustrated embodiment for example the assembly comprising the second shoulder 123, the metal pin 160 inserted there and the generic mass acting on the load plate 140.

Thanks to this configuration it is possible to subtract the accelerations detected by the second accelerometer 233 from those detected by the first accelerometer 232, thus making it possible to know with precision the disturbances acting on the load cell 100 and eliminate them from the signals detected to the benefit of the accuracy of the weight measurements.

The present invention has been described up to now with reference to preferred embodiments. It should be understood that there can be other embodiments that derive from the same inventive core, as defined by the scope of protection of the claims given below.

## Claims

1. A load cell (100) comprising:
i) a base (110),
ii) an elastically deformable body (120) fixed to said base (110) so as to define a cavity (130) therewith,
iii) an electronic unit (200) housed in one between the base (110) and said elastically deformable body (120) and comprising a first printed circuit board (210) having a flat shape, said first printed circuit board (210) being accessible from a seat (114) formed in the base (110) or in the elastically deformable body (120) and facing said cavity (130) close to a flat portion formed in one between the deformable body (120) and the base (110), said flat portion being parallel to the first printed circuit board (210) which is configured to define with the latter a capacitive or inductive position sensor; wherein the deformable body (120) is movable from and towards the base (110) and is configured such that, during the movements from and towards the base (110), the flat portion is kept parallel to the first printed circuit board (210), the load cell being **characterized in that** it also comprises a metal pin (160) slidably fitted and lockable in position inside a cavity (124) formed in one between the deformable body (120) or the base (110) coaxially to the seat (114) of the first printed circuit board (210), a free end of said metal pin (160) protruding from said cavity (124) and forming the flat portion of the deformable body (120) or of the base (110) that defines a capacitive or inductive position sensor with the first printed circuit board (210).

2. A load cell (100) according to claim 1, wherein said electronic unit (200) is housed in the base (110) and wherein the cavity (124) of the metal pin (160) is formed in the deformable body (120).

3. A load cell according to claim 2, further comprising end-stroke members (170) slidably fitted and lockable in position in respective seats having a corresponding size that are formed in the deformable body (120) or in the base (110) and face in the cavity (130).

4. A load cell (100) according to claim 2 or 3, wherein the seat (114) inside which the first printed circuit board (210) is housed comprises a collar (115) that protrudes into the cavity (130) perpendicularly to the base (110) and wherein the cavity (124) inside which the metal pin (160) is fitted includes a recess (125) wherein said collar (115) is partially fitted with play, the metal pin (160) protruding from its cavity (124) being fitted with play in the collar (115).

5. A load cell (100) according to any one of claims 2 to 4, wherein the electronic unit (200) comprises a first accelerometer (232) housed in the base (110) and a second accelerometer (233) mounted atop the deformable body (120) close to a loading area (140) intended to receive a load to be measured, said second accelerometer (233) being connected to the electronic unit (200) through a flexible printed circuit board (234) that comes out from the base (110) and is wound on the deformable body (120).

6. A load cell (100) according to any one of claims 2 to 5, wherein the base (110) has generally the shape of a parallelepiped and the deformable body (120) has generally the shape of a parallelepiped wherein a through opening (121) having the shape of a butterfly is formed in a transverse direction (Y), said through opening (121) extending in a longitudinal direction (X) perpendicular to said transverse direction (Y) between a first shoulder (122) and a second shoulder (123) of the deformable body (120).

7. A load cell according to claim 6, wherein the deformable body (120) is fixed at said first shoulder (122) on a portion (111) of the base (110) protruding therefrom at one end thereof, the overall configuration being such that the deformable body (120) and the base (110) are spaced apart in a vertical direction (Z), perpendicular to the longitudinal direction (X) and the transverse direction (Y), and such that between the deformable body (120) and the base (110) a cavity (130) is formed that extends from said protruding portion (111) of the base (110) in the longitudinal direction (X) and in the transverse direction (Y).

8. A load cell (100) according to claim 7, wherein the metal pin (160) is fitted in said second shoulder (123) of the deformable body (120).

9. A load cell according to claim 8, wherein the end-stroke members (170) are fitted in the second shoulder (123) of the deformable body (120) close to a free end thereof in the longitudinal direction (X).

10. A method for the calibration of a load cell (100) according to any of claims 1 to 9, said method comprising the following steps:
a) Keeping a metal pin (160) of said load cell (100) free to slide inside a cavity (124) formed in one between a deformable body (120) and a base (110) of the load cell (100) so that a free end of said metal pin (160) protruding from said cavity (124) contacts a first printed circuit board (210) having a flat shape housed in the other one between said base (110) and said deformable body (120) of the load cell (100), the first printed circuit board being housed in a seat (114) coaxial to the cavity (124) of the metal pin (160);
b) Arranging a known mass on a loading area (140) of the deformable body (120) of said load cell (100);
c) Locking the metal pin (160) inside its cavity (124) when the deformable body (120) has reached a position of maximum approach to the base (110);
d) Removing said known mass from said loading area (140).

11. A calibration method according to claim 10, also comprising the following steps:
e) Keeping end-stroke members (170) of the load cell (100) free to slide in respective
seats formed in the deformable body (120) or in the base (110);
f) Reducing the known mass of few percentage points so as to decrease its weight;
g) Blocking said end-stroke members in their respective seats when the deformable body (120) has reached a position of maximum approach to the base (110),
wherein step e) is performed simultaneously to the step a) and steps f) and g) are performed immediately after the step c) of locking the metal pin (160) before removing the known mass from the loading area (140).
